# EUROPÄISCHE PATENTSCHRIFT

(11) **EP 2 489 907 B1**
(45) Veröffentlichungstag und Bekanntmachung des Hinweises auf die Patenterteilung: **23.03.2016**
(21) Anmeldenummer: 12151403.8
(22) Anmeldetag: 17.01.2012
(51) Int. Cl.: F16J 15/00, F04B 39/04

(54) **Dichtpackung für eine hin- und hergehende Kolbenstange eines Kolbenkompressors**
Seal for a moving piston rod of a piston compressor
Dispositif d'étanchéité pour une tige de piston à mouvement de va-et-vient d'un compresseur à piston

(30) Priorität: 17.02.2011 AT 2132011
(43) Veröffentlichungstag der Anmeldung: 22.08.2012
(73) Patentinhaber: Hoerbiger Kompressortechnik Holding GmbH, 1220 Wien (AT)
(72) Erfinder: Lindner-Silwester, Tino, 1230 Wien (AT); Hold, Christian, 2102 Bisamberg (AT); Kernbichler, Christian, 2431 Enzersdorf an der Fischa (AT); Brandl, Andreas, 1050 Wien (AT)
(74) Vertreter: Patentanwälte Pinter & Weiss OG

(56) Entgegenhaltungen:
- WO-A1-2010/079227
- DE-A1- 3 840 487
- GB-A- 344 640
- US-A- 1 837 115

## Beschreibung

Die gegenständliche Erfindung betrifft eine Dichtpackung für eine hin- und hergehende Kolbenstange eines Kolbenkompressors, wobei in der Dichtpackung ein erstes und ein zweites Dichtelement vorgesehen sind, die in einer Barrieren-Ausnehmung der Dichtpackung angeordnet sind und eine in die Barrieren-Ausnehmung mündende Zuleitung für ein Dichtmedium vorgesehen ist.

In gewissen Anwendungen von Kompressoren, wie z.B. in Kompressorstationen bei der Beförderung von Erdgas, wird es aus Umweltschutzgründen immer wichtiger (auch durch immer strenger werdende Vorgaben des Gesetzgebers), die Leckage des Kompressionsmediums (z.B. Erdgas) aus dem Kompressor zu minimieren. Diese Leckage entsteht im Wesent-lichen entlang der hin- und hergehenden Kolbenstange, die in der Regel gegenüber dem Kompressorgehäuse mittels sogenannter hinlänglich bekannter Dichtpackungen abgedichtet wird. Es müssten daher durch herkömmliche Dichtpackungen hohe Anforderungen erfüllt werden, um die Forderungen an die Dichtheit zu erfüllen, was allerdings nicht immer möglich ist, aber zumindest den Aufwand für die Abdichtung erheblich erhöhen würde.

In der WO 2010/079227 A1 wird eine gasdichte Abdichtung in einer Dichtpackung beschrieben, die eine Gasleckage entlang der Kolbenstange verhindert. Dazu wird zwischen zwei Dichtelementen ein unter Druck stehendes Dichtmedium eingesperrt, das auf diese Weise eine Dichtmediumbarriere bildet und eine Gasleckage verhindert. Daneben können noch weitere Dichtelemente mit verschiedenen Funktionen, wie z.B. ein Abstreifring, ein Packungsring oder eine Packungsring-Kombination oder ein hydraulischer Dichtring, angeordnet werden. Die darin beschriebene Abdichtung ist im Normalbetrieb gasdicht. Bei einer Fehlfunktion, z.B. bei Ausfall der hydraulischen Versorgung der Dichtmediumbarriere oder bei Beschädigung eines Dichtelements der Dichtmediumbarriere, kann die Funktion der Abdichtung allerdings nicht mehr gewährleistet werden, was in weiterer Folge die Notabschaltung des Kompressors zur Folge haben kann. Das bedeutet auch, dass auf bestimmte außerordentliche Zustände nur mit der erzwungenen unerwünschten Abschaltung des Kompressors reagiert werden kann. Ein beschädigtes Dichtelement der Dichtmediumbarriere kann z.B. dazu führen, dass Dichtmedium in den Zylinder oder den Kurbelkasten gefördert wird, was ebenfalls unerwünscht ist zu Folgeschäden am Kompressor (z.B. Kolben, Kolbenstange, Kurbelwelle, Pleuel, etc.) führen kann und daher in der Regel die Abschaltung des Kompressors zur Folge hat. Insbesondere eine Überschmierung des Zylinders sollte dabei verhindert werden, um eventuelle Folgeschäden zu vermeiden. Fällt z.B. die hydraulische Versorgung der Dichtmediumbarriere aus, so ist die Dichtfunktion der Dichtpackung nicht mehr gegeben und es kann Kompressionsmedium aus dem Zylinder in den Kurbelkasten und von dort in die Umgebung gelangen, was ebenfalls zur erzwungenen Abschaltung des Kompressors führen kann. Aufgrund der oben angeführten Problematik kann die hydraulische Versorgung im Fehlerfall aber auch nicht einfach abgestellt werden, sodass im Fehlerfall der gesamte Kompressor zur Wartung bzw. Schadensbehebung abgestellt werden muss. Das führt zu einem Betriebsausfall, der in der Praxis einen großen wirtschaftlichen Schaden verursachen kann.

Ein weiteres Problem der WO 2010/079227 A1 liegt darin, dass für eine sichere Rückgewinnung des Dichtmediums eine sehr komplexe, aufwendige Konfiguration von verschiedenen Dichtelementen und Druck- und Drainageleitungen erforderlich ist, wie z.B. in Fig. 6 der WO 2010/079227 A1 dargestellt. Das macht eine solche Anordnung, und vor allem eine Nachrüs-tung bestehender Kompressoren, aufwendig und daher wirtschaftlich uninteressant.

Es ist daher eine Aufgabe der gegenständlichen Erfindung, eine gasdichte Dichtpackung nach dem Stand der Technik so zu verbessern, dass auch im Falle einer Fehlfunktion einer Komponente der Dichtpackung, wie z.B. der hydraulischen Versorgung oder eines Dichtelements, die Funktion der Dichtpackung zumindest in ausreichendem Maße aufrecht erhalten werden kann und eine Abschaltung des Kompressors vermieden wird und die Dichtpackung dabei trotzdem einfach aufgebaut ist.

Diese Aufgabe wird erfindungsgemäß dadurch gelöst, dass am kurbelkastenseitigen Ende der Dichtpackung eine Abstreif-Ausnehmung vorgesehen ist, in der ein gasdichter Abstreifring angeordnet ist und am zylinderseitigen Ende der Dichtpackung eine Dichtring-Ausnehmung vorgesehen ist, in der eine Dichtringanordnung angeordnet ist, wobei die Barrieren-Ausnehmung axial zwischen Abstreif-Ausnehmung und Dichtring-Ausnehmung angeordnet ist und in der Dichtpackung eine Drainageleitung vorgesehen ist, die mit dem Raum zwischen Barrieren-Ausnehmung und zweiter Ausnehmung verbunden ist. Durch diese Konfiguration wird auf einfache Weise erreicht, dass bei Ausfall oder Beschädigung der Dichtmediumbarriere der gasdichte Abstreifring die Funktion der gasdichten Abdichtung übernimmt und eventuell aus dem Zylinder austretendes Kompressionsmedium über die Drainageleitung kontrolliert und sicher abgeführt werden kann. Damit kann im Fehlerfall trotzdem die Dichtfunktion der Dichtpackung aufrecht erhalten werden kann. Dadurch kann eine Abschaltung des Kompressors vermieden werden, wodurch die Betriebssicherheit einer solchen Dichtpackung erheblich verbessert werden kann.

Um ein sicheres Einschalten der Dichtmediumbarriere zu ermöglichen, ist in der Barrieren-Ausnehmung bevorzugt ein Federelement angeordnet ist, das das erste und das zweite Dichtelement axial auseinanderdrückt. Damit ist die Position der Dichtelemente im Ruhezustand festgelegt und es ist sichergestellt, das die Dichtelemente bei Einschalten der hydraulischen Versorgung der Dichtmediumbarriere axial gegen die Begrenzung der Barrieren-Ausnehmung gedrückt werden.

Der Abbau des zylinderseitigen hohen Druckes kann bevorzugt auf mehrere Dichtringanordnungen aufgeteilt werden, indem am zylinderseitigen Ende der Dichtpackung eine weitere Dichtring-Ausnehmung vorgesehen ist, in der eine weitere Dichtringanordnung angeordnet ist. Damit kann die Anforderung an eine einzelne Dichtringanordnung reduziert werden.

Vorteilhaft ist dazu in einer zweiten Dichtring-Ausnehmung zum Abbau der dynamischen Druckspitzen des zylinderseitigen Druckes ein starrer Dichtring angeordnet.

Um die Betriebssicherheit der Dichtpackung noch weiter zu erhöhen, kann vorgesehen sein, in einer der Dichtring-Ausnehmungen ein weiteres Dichtelement anzuordnen. Damit kann auch ein Ausfall eines Dichtelements der Dichtmediumbarriere kompensiert werden.

Ein besonders einfacher konstruktiver Aufbau der Dichtpackung ergibt sich, wenn eine Barrieren-Ausnehmung und/oder eine Abstreif-Ausnehmung und/oder eine Dichtring-Ausnehmung in einer Kammerscheibe angeordnet ist.

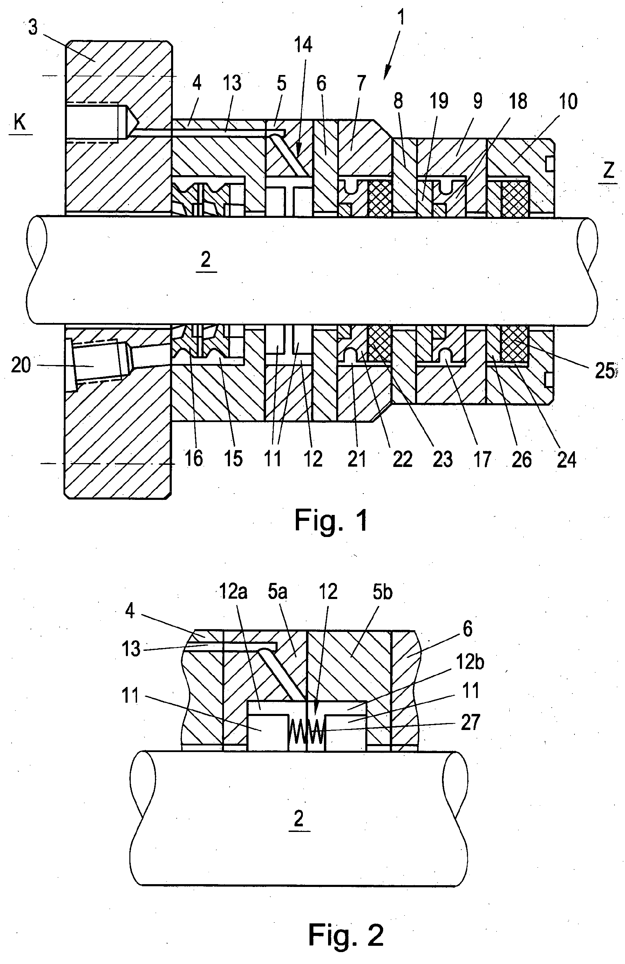

Die gegenständliche Erfindung wird nachfolgend unter Bezugnahme auf die Figuren 1 und 2, die nicht einschränkende, vorteilhafte Ausgestaltungen der Erfindung zeigen, näher erläutert. Dabei zeigt
Fig. 1 eine bevorzugte Ausführung einer Dichtpackung und
Fig. 2 eine weitere Ausführung der Dichtmediumbarriere.

In einer vorteilhaften Ausgestaltung nach Fig. 1 umfasst die erfindungsgemäße gasdichte Abdichtung eine Dichtpackung 1 mit einer Anzahl von Kammerscheiben 3, 4, 5, 7, 9, 10, in denen zum Teil Dichtelemente unterschiedlicher Funktion angeordnet sind. Die Kammerscheiben 3, 4, 5, 7, 9, 10 können in bekannter Weise mittels durchgehender Bolzen miteinander verbunden sein. Diese Dichtpackung 1 wird dabei in hinlänglich bekannter Weise in das (hier nicht dargestellte) Gehäuse eines Kompressors eingesetzt, wobei eine erste Kammerscheibe 3 als Flanschscheibe ausgeführt ist, mittels der die Dichtpackung 1 im Gehäuse befestigt werden kann, z.B. mittels über den Umfang verteilter Schrauben. Die Dichtpackung 1 dichtet dabei zwischen einem zylinderseitigen Raum Z, mit hohem Druck, und einem kurbelkastenseitigen Raum K, in der Regel mit Atmosphärendruck, ab. "Abdichten" bedeutet hierbei zu verhindern, dass das Kompressionsmedium, wie z.B. Erdgas, vom zylinderseitigen Raum Z, z.B. entlang der Kolbenstange 2, in den kurbelkastenseitigen Raum K gelangt und somit eine unerwünschte Leckage an Kompressionsmedium vorhanden wäre.

In einer Barrieren-Kammerscheibe 5 sind dazu in einer Barrieren-Ausnehmung 12 zwei Dichtelemente 11, axial beabstandet zueinander, angeordnet. Selbstverständlich kann jedes Dichtelement 11 gleichwertig auch in einer eigenen Barrieren-Kammerscheibe 5a, 5b anstelle einer gemeinsamen Barrieren-Kammerscheibe 5 angeordnet sein, wie in Fig. 2 dargestellt. In diesem Fall würde die Barrieren-Ausnehmung 12 aus zwei miteinander verbundenen Ausnehmungen 12a, 12b in den jeweiligen Barrieren-Kammerscheiben 5a, 5b gebildet werden. Zwischen den beiden Barrieren-Kammerscheiben 5a, 5b in Fig. 2 könnte natürlich auch noch eine weitere Trennscheibe angeordnet sein, solange die beiden Ausnehmungen 12a, 12b zur Ausbildung der Bärrieren-Ausnehmung 12 hydraulisch miteinander verbunden sind.

In die Barrieren-Ausnehmung 12 mündet eine hydraulische Zuführungsleitung 13, über die Dichtmedium, z.B. Öl, unter Druck zugeführt wird. Durch den Druck des Dichtmediums werden die Dichtelemente 11 sowohl axial gegen die benachbarten Kammerscheiben 4, 6 (wie in Fig. 1) bzw. gegen die axiale Begrenzung der Barrieren-Kammerscheibe 5, 5a, 5b (wie in Fig. 2), als auch radial innen gegen die Kolbenstange 2 gedrückt. Damit wird eine Dichtmediumbarriere 14 gebildet, die ein Durchströmen von Kompressionsmedium entlang der Kolbenstange 2 unterbindet.

Die Dichtelemente 11 können dabei auch durch ein Federelement 27 (siehe Fig. 2) axial vorgespannt sein, indem die beiden Dichtelemente 11 durch das Federelement 27 axial ausei-nander und gegen die axiale Begrenzung der Barrieren-Ausnehmung 12 gedrückt werden. Auf diese Weise kann ein sicheres Einschalten der Dichtmediumbarriere 14 erreicht werden, da die Position der Dichtelemente 11 auf diese Weise festgelegt ist.

Am kurbelkastenseitigen Ende K der Dichtpackung 1 ist weiters eine Abstreif-Kammerscheibe 4 vorgesehen, hier zwischen der ersten Kammerscheibe 3 und der Barrieren-Kammerscheibe 5 bzw. einer der Barrieren-Kammerscheibe 5a. In der Abstreif-Kammerscheibe 4 ist in einer Abstreif-Ausnehmung 15 ein zumindest in Richtung Kurbelkasten gasdichter Abstreifring 16, hier zwei axial hintereinander liegende gasdichte Abstreifringe 16, angeordnet. "Gasdicht" bedeutet in diesem Zusammenhang, dass am Abstreifring 16 bis auf nicht zu vermeidende fertigungsbedingte Imperfektionen (wie z.B. Fertigungsabweichungen, Rauigkeiten, etc.) keine definierten Gasleckagepfade in axialer oder radialer Richtung vorhanden sind. Ein solcher gasdichter Abstreifring ist z. B. aus der österreichischen Patentanmeldung A 216/2010 bekannt.

Am zylinderseitigen Ende Z der Dichtpackung 1 ist in zumindest einer Dichtring-Kammerscheibe 9 in einer Dichtring-Ausnehmung 17 eine herkömmliche, an sich bekannte Dicht-ringanordnung 18 angeordnet, wie z.B. ein segmentierter Dichtring entsprechend der EP 2 056 003 A1, oder eine an sich bekannte Dichtringkombination, z.B. aus einem axial aneinander liegenden radial und tangential geschnittenen Dichtring. In der Dichtring-Ausnehmung 17 kann weiters ein starrer Stützring 19 vorgesehen sein, an dem die Dichtringanordnung 18 axial anliegen kann.

In dieser Minimalkonfiguration der Dichtpackung 1, also mit einer Dichtmediumbarriere 14, einem kurbelkastenseitigen K, gasdichtem Abstreifring 16 in einer Abstreif-Ausnehmung 15 und einer zylinderseitigen Z Dichtringanordnung 18 in einer Dichtring-Ausnehmung 17 wird die Funktion der Dichtpackung 1 auch dann aufrecht erhalten, wenn die hydraulische Versorgung der Dichtmediumbarriere 14 ausfällt, wie nachfolgend erläutert.

Im Normalbetrieb wird über die hydraulische Zuführungsleitung 13 unter Druck stehendes Dichtmedium in die Barrieren-Ausnehmung 12 zugeführt. Die beiden Dichtelemente 11 werden dabei gegen die axialen Begrenzungen der Barrieren-Ausnehmung 12 und gegen die Kolbenstange 2 gepresst, womit sich eine gasdichte Dichtmediumbarriere 14 ausbildet. Die Dichtelemente 11 sollten dabei bevorzugt so ausgeführt sein, dass möglichst wenig Dichtmedium aus der Dichtmediumbarriere 14, z.B. entlang der Oberfläche der Kolbenstange 2, verloren geht. Durch das Hin- und Hergehen der Kolbenstange 2 wird allerdings immer etwas an der Kolbenstangenoberfläche haftendes Dichtmedium durch die Dichtmediumbarriere 14 gefördert werden. Diese praktisch nicht zu vermeidende Dichtmediumleckage sollte aber vorteilhaft so gering wie möglich sein, was durch ein entsprechendes Design der Dichtelemente 11 möglich ist. Die Dichtmediumleckage wird kurbelkastenseitig K durch den Abstreifring 16 von der Kolbenstange 2 abgestreift, sodass ein Austritt von Dichtmedium aus der Dichtpackung 1 in den Kurbelkasten weitestgehend unterbunden werden kann. Das abgestreifte Dichtmedium kann über eine Drainageleitung 20, die mit dem Raum zwischen Dichtmediumbarriere 14 und Abstreifring 16 verbunden ist, abgeführt werden und gegebenenfalls der Dichtmediumversorgung bzw. einem Dichtmediumreservoir über entsprechende Leitungen rückgeführt werden. An der Dichtringanordnung 18 am zylinderseitigen Ende Z der Dichtpackung 1 wird der über dem Saugdruck liegende, zylinderseitige hohe Druck abgebaut, sodass der notwendige Druck der hydraulischen Versorgung in die Dichtmediumbarriere 14 verringert werden kann.

Falls die hydraulische Versorgung der Dichtmediumbarriere 14 ausfällt oder abgeschaltet wird (siehe weiter unten), so wird der über dem Saugdruck liegende, hohe zylinderseitige Druck an der Dichtringanordnung 18 abgebaut. Der gasdichte Abstreifring 16 übernimmt dann auch die Abdichtung in Richtung des Kurbelkastens und eine allfällige Kompressions-mediumleckage, z.B. Erdgas, wird über die Drainageleitung 20 abgeführt und z.B. abgefackelt. Damit wird unterbunden, dass Kompressionsmedium unerwünscht in den Kurbelkasten gelangt und von dort unkontrolliert in die Umgebung austreten kann. Somit kann die Dichtpackung 1 auch im Fehlerfall weiterverwendet werden, zumindest bis zur nächsten Wartung oder Reparatur. Eine zwischenzeitliche Abschaltung des Kompressors ist dazu allerdings nicht mehr erforderlich.

Wird ein Dichtelement 11 der Dichtmediumbarriere 14 leck, z.B. durch übermäßigen Verschleiß oder durch eine sonstige Beschädigung, so kann das anhand der stark steigenden Fördermenge an Dichtmedium festgestellt werden, da vermehrt Dichtmedium durch die Dichtmediumbarriere 14 verloren geht. In diesem Fall kann die hydraulische Versorgung der Dichtmediumbarriere 14 einfach abgestellt werden, ohne die Funktion der Dichtpackung 1 wesentlich zu beeinträchtigen.

Die Funktion der Dichtpackung 1 kann durch Anordnung weiterer Elemente verbessert werden. Wie in Fig. 1 dargestellt, könnten z.B. weitere Dichtringanordnungen oder Dichtelemente vorgesehen sein.

So kann am zylinderseitigen Ende Z der Dichtpackung 1 in einer zweiten Dichtring-Kammerscheibe 10 und/oder dritten Dichtring-Kammerscheibe 7 in einer zweiten Dichtring-Ausnehmung 24 und/oder in einer dritten Dichtring-Ausnehmung 21 eine zweite Dichtringanordnung 25, z.B. wie dargestellt ein ungeschnittener Dichtring, bzw. dritte Dichtringanordnung 22, z.B: wie dargestellt ein segmentierter Dichtring entsprechend der EP 2 056 003 A1, vorgesehen sein, eventuell wieder kombiniert mit einem Stützring 26. An einer solchen Dichtringanordnung 22, 25 wird teilweise der zylinderseitige Druck abgebaut, sodass der Abbau des zylinderseitigen Druckes vorteilhaft auf mehrere Dichtringanordnungen 18, 22, 25 aufgeteilt werden kann. Im Falle eines ungeschnittener Dichtringes erfolgt an diesem ein Abbau der dynamischen Druckspitzen des zylinderseitigen Druckes.

Es kann in einer der Dichtring-Kammerscheiben 7, 9, 10 auch ein weiteres Dichtelement 23, z.B. ein Dichtelement 11 wie in der Dichtmediumbarriere 14 verwendet, vorgesehen sein. Dieses Dichtelement 23 kann dazu dienen, im Falle eines Ausfalls des zylinderseitigen Dichtelements 11 der Dichtmediumbarriere 14 dessen Funktion zu übernehmen. In diesem Fall würde die Dichtmediumbarriere 14 zwischen dem kurbelseitigen Dichtelement 11 und dem Dichtelement 23 gebildet, wodurch eine weitere Sicherheitsfunktion realisiert werden kann.

Zwischen einzelnen Dichtring-Kammerscheiben 3, 4, 5, 5a, 5b, 7, 9, 10 könnten bei Bedarf auch Trennscheiben 6, 8 angeordnet sein, z.B. um einen einfachen Zusammenbau der Dichtpackung 1 zu gewährleisten.

Ebenso ist es selbstverständlich denkbar, zwei oder mehrere benachbarte Kammerscheiben, z.B. die Abstreif-Kammerscheibe 4 und die Barrieren-Kammerscheibe 5a oder die dritte Dichtring-Kammerscheibe 7 und die Barrieren-Kammerscheibe 5b, als einzelne Kammerscheibe auszuführen.

## Patentansprüche

1. Gasdichte Dichtpackung für eine hin- und hergehende Kolbenstange (2) eines Kolbenkompressors, wobei in der Dichtpackung (1) ein erstes und ein zweites Dichtelement (11) vorgesehen sind, die in einer Barrieren-Ausnehmung (12) der Dichtpackung (1) angeordnet sind und eine in die Barrieren-Ausnehmung (12) mündende Zuleitung (13) für ein Dichtmedium vorgesehen ist, wobei am kurbelkastenseitigen Ende (K) der Dichtpackung (1) eine Abstreif-Ausnehmung (15) vorgesehen ist, in der ein Abstreifring (16) angeordnet ist und am zylinderseitigen Ende (Z) der Dichtpackung (1) eine Dichtring-Ausnehmung (17) vorgesehen ist, in der eine Dichtringanordnung (18) angeordnet ist, wobei die Barrieren-Ausnehmung (14) axial zwischen Abstreif-Ausnehmung (15) und Dichtring-Ausnehmung (17) angeordnet ist und wobei in der Dichtpackung (1) eine Drainageleitung (20) vorgesehen ist, die mit dem Raum zwischen Barrieren-Ausnehmung (14) und Abstreif-Ausnehmung (15) verbunden ist, **dadurch gekennzeichnet, dass** der Abstreifring (16) in der Abstreif-Ausnehmung (15) ein gasdichter Abstreifring (16) ist.

2. Gasdichte Dichtpackung nach Anspruch 1, **dadurch gekennzeichnet, dass** in der Barrieren-Ausnehmung (14) ein Federelement (27) angeordnet ist, das das erste und das zweite Dichtelement (11) axial auseinanderdrückt.

3. Gasdichte Dichtpackung nach Anspruch 1 oder 2, **dadurch gekennzeichnet, dass** am zylinderseitigen Ende (Z) der Dichtpackung (1) eine weitere Dichtring-Ausnehmung vorgesehen ist, in der eine weitere Dichtringanordnung angeordnet ist.

4. Gasdichte Dichtpackung nach Anspruch 3, **dadurch gekennzeichnet, dass** in einer zweiten Dichtring-Ausnehmung (24) eine zweite Dichtringanordnung, bevorzugt ein ungeschnittener Dichtring (25), angeordnet ist.

5. Gasdichte Dichtpackung nach Anspruch 3 oder 4, **dadurch gekennzeichnet, dass** in einer dritten Dichtring-Ausnehmung (21) eine dritte Dichtringanordnung (22) angeordnet ist.

6. Gasdichte Dichtpackung nach einem der Ansprüche 1 bis 5, **dadurch gekennzeichnet, dass** in einer der weiteren Dichtring-Ausnehmungen (21, 24) ein weiteres Dichtelement (23) angeordnet ist.

7. Gasdichte Dichtpackung nach einem der Ansprüche 1 bis 6, **dadurch gekennzeichnet, dass** die Barrieren-Ausnehmung (14) und/oder die Abstreif-Ausnehmung (15) und/oder eine Dichtring-Ausnehmung (17, 21, 24) in einer Kammerscheibe (4, 5, 7, 9, 10) angeordnet ist.

## Claims

1. Gas-tight sealing packing for a reciprocating piston rod (2) of a reciprocating compressor wherein a first and a second sealing element (11) are provided in the sealing packing (1), which are arranged in a barrier recess (12) of the sealing packing (1), and a feed line (13) for a sealing medium that opens up into the barrier recess (12) is provided, wherein a scraping recess (15) is arranged on the crankcase-side end (K) of the sealing packing (1), in which there is arranged a scraper ring (16), and a sealing ring recess (17) is arranged on the cylinder-side end (Z) of the sealing packing (1), in which there is arranged a sealing ring arrangement (18), wherein the barrier recess (12) is arranged axially between the scraper recess (15) and the sealing ring recess (17) and wherein a drain line (20) is provided in the sealing packing (1) that is connected with the space between the barrier recess (12) and the scraper recess (15), **characterized in that** the scraper ring (16) in the scraping recess (15) is a gas-tight scraper ring (16).

2. Gas-tight sealing packing according to Claim 1 **characterized in that a** spring element (27) is arranged in the barrier recess (12) that presses the first and second sealing elements (11) axially apart.

3. Gas-tight sealing packing according to Claim 1 or 2 **characterized in that** on the cylinder-side end (Z) of the sealing packing (1) a further sealing ring recess is provided in which there is arranged a further sealing ring arrangement.

4. Gas-tight sealing packing according to Claim 3 **characterized in that** a second sealing ring arrangement is arranged in a second sealing ring recess (24), preferably an uncut sealing ring (25).

5. Gas-tight sealing packing according to Claim 3 or 4 **characterized in that** a third sealing ring arrangement (22) is arranged in a third sealing ring recess (21).

6. Gas-tight sealing packing according to Claims 1 to 5 **characterized in that** a further sealing element (23) is arranged in one of the further sealing ring recesses (21, 24).

7. Gas-tight sealing packing according to Claims 1 to 6 **characterized in that** the barrier recess (12) and/or the scraper recess (15) and/or a sealing ring recess (17, 21, 24) is/are arranged in a chamber disk (4, 5, 7, 9, 10).

## Revendications

1. Garniture d'étanchéité étanche aux gaz destinée à une tige de piston à mouvement alternatif (2) d'un compresseur à pistons, des premier et second éléments d'étanchéité (11) étant prévus dans la garniture d'étanchéité (1) qui sont disposés dans un creux formant barrière (12) de la garniture d'étanchéité (1) et un conduit (13) d'alimentation en médium d'étanchéité étant prévu qui débouche dans le creux formant barrière (12), à l'extrémité (K) de la garniture d'étanchéité (1) côté carter de vilebrequin étant prévu un creux de raclage (15) dans lequel est disposée un segment racleur (16) et à l'extrémité (Z) de la garniture d'étanchéité (1) côté cylindre étant prévu un creux de bague d'étanchéité (17) dans lequel est disposé un ensemble de bague d'étanchéité (18), le creux formant barrière (14) étant disposé axialement entre le creux de raclage (15) et le creux de bague d'étanchéité (17) et dans la garniture d'étanchéité (1) étant prévu un conduit de drainage (20) qui est relié à l'espace situé entre le creux formant barrière (14) et le creux de raclage (15), **caractérisée en ce que** le segment racleur (16) dans le creux de raclage (15) est un segment racleur (16) étanche aux gaz.

2. Garniture d'étanchéité étanche aux gaz selon la revendication 1, **caractérisée en ce que** dans le creux formant barrière (14) est disposé un élément à ressort (27) qui repousse les premier et second éléments d'étanchéité (11) axialement l'un de l'autre.

3. Garniture d'étanchéité étanche aux gaz selon la revendication 1 ou 2, **caractérisée en ce qu'**il est prévu à l'extrémité (Z) de la garniture d'étanchéité (1) côté cylindre un creux de bague d'étanchéité supplémentaire dans lequel est disposé un autre ensemble de bague d'étanchéité.

4. Garniture d'étanchéité étanche aux gaz selon la revendication 3, **caractérisée en ce qu'**un deuxième ensemble de bague d'étanchéité, de préférence une bague d'étanchéité non coupée (25), est disposé dans un deuxième creux de bague d'étanchéité (24).

5. Garniture d'étanchéité étanche aux gaz selon la revendication 3 ou 4, **caractérisée en ce qu'**un troisième ensemble de bague d'étanchéité (22) est disposé dans un troisième creux de bague d'étanchéité (21).

6. Garniture d'étanchéité étanche aux gaz selon l'une des revendications 1 à 5, **caractérisée en ce qu'**un élément d'étanchéité supplémentaire (23) est disposé dans l'un des creux de bague d'étanchéité supplémentaire (21, 24).

7. Garniture d'étanchéité étanche aux gaz selon l'une des revendications 1 à 6, **caractérisée en ce que** le creux formant barrière (14) et/ou le creux de raclage (15) et/ou un creux de bague d'étanchéité (17, 21, 24) est disposé dans un disque de chambre (4, 5, 7, 9, 10) .
